# EUROPÄISCHE PATENTANMELDUNG

(11) **EP 0 838 796 A2**
(43) Veröffentlichungstag der Anmeldung: **29.04.1998**
(21) Anmeldenummer: 98101458.2
(22) Anmeldetag: 28.01.1998
(51) Int. Cl.: G08C 19/00

(54) **Daten- bzw. Informationsübertragungssystem**

(71) Anmelder: SIEMENS AKTIENGESELLSCHAFT, 80333 München (DE)
(72) Erfinder: Leins, Ralf, Dipl.-Ing., 75228 Ispringen (DE); Walz, Horst, Dipl.-Inf., 75334 Straubenhardt (DE); Lange, Ronald, Dipl.-Inf. (univ.), 90768 Fürth (DE); Lo, George, Dr., * (DE); Schmoll, Jürgen, Dipl.-Ing. (univ.), 91801 Markt Berolzheim (DE); Wagner, Peter, Dipl.-Ing. (univ.), 91217 Hersbrück (DE); Herberth, Harald, Dipl.-Inf. (univ.), 90522 Oberasbach (DE); Braun, Ulrich, Dipl.-Inf. (univ.), 97276 Margetshöchheim (DE); Pechmann, Klaus, Dipl.-Math., 90537 Feucht (DE)

(57) **Zusammenfassung**

Die Erfindung bezieht sich auf den Aspekt, einen im Stand der Technik erforderlichen jeweils anwendungsspezifischen Aufruf-Code als eine in einer separaten Komponente realisierte Außensteuerung auszuführen, wobei die Außensteuerung in beliebigen Containern verwendbar ist, ohne dabei die Container selbst zu verändern, noch diese zum Entwurfszeitpunkt der Außensteuerung überhaupt zu kennen. Die Erfindung kommt in Daten- bzw. Informationsübertragungssystemen, insbesondere Prozeßvisualisierungssystemen zum Einsatz. Die Komponenten sind als Software-Komponenten, insbesondere als sog. ActiveX-Controls realisiert.

## Beschreibung

Die vorliegende Erfindung betrifft ein Daten- bzw. Informationsübertragungssystem insbesondere zur Visualisierung von Daten, z.B. Prozeßdaten, oder Ereignissen mit zumindest einer im wesentlichen Daten liefernden Komponente und zumindest einer im wesentlichen Daten verwertende Komponente.

Daten- bzw. Informationsübertragungssysteme werden beispielsweise zur Steuerung und/oder Überwachung eines gesteuerten und/oder überwachten externen technischen Prozesses eingesetzt. Dazu weist das Daten- bzw. Informationsübertragungssystem zumindest eine Verarbeitungs- und Speichereinrichtung, insbesondere einem Mikroprozessor mit einem zugeordneten Speicher und eine von der Verarbeitungs- und Speichereinrichtung ansteuerbare Visualisierungseinrichtung, insbesondere einem Bildschirm auf. Zur Kopplung mit dem technischen Prozeß sind für das Daten- bzw. Informationsübertragungssystem Mittel zum Anschluß externer Sensoren oder Aktoren des gesteuerten und/oder überwachten technischen Prozesses vorgesehen.

Zur Überwachung des technischen Prozesses findet dabei die Daten- bzw. Informationsübertragung im wesentlichen in einer Richtung statt, nämlich vom technischen Prozeß in Richtung der Visualisierungseinrichtung. Zur Steuerung des technischen Prozesses findet dagegen die Daten- bzw. Informationsübertragung im wesentlichen in der entgegengesetzten Richtung, nämlich der Visualisierungseinrichtung zum technischen Prozeß, statt. Die vorliegende Erfindung betrifft Daten- und Informationsübertragungen der vorbeschriebenen Art wie auch Mischformen der vorbeschriebenen Art. Unter Mischform wird dabei z.B. eine Daten- bzw. Informationsübertragung verstanden, die im wesentlichen in Richtung der Visualisierungeinrichtung erfolgt, wobei die Visualisierungseinrichtung neben der bloßen Informationsaufbereitung für den Benutzer zusätzlich auch Bedienmöglichkeiten aufweist, die eine Einflußnahme auf den technischen Prozeß gestatten und mithin eine Daten- bzw. Informationsübertragung zum technischen Prozeß bedingen.

Daten- bzw. Informationsübertragungssysteme der eingangs genannten Art sind als Prozeßvisualisierungssysteme bereits bekannt. Prozeßvisualisierungssysteme werden, aufgrund der dadurch bedingten erhöhten Flexibilität, verstärkt in Software ausgeführt.

Die im wesentlichen Daten liefernde Komponente, im folgenden Server, ist in diesem Zusammenhang z.B. eine den Datentransfer zwischen dem technischen Prozeß und der Verarbeitungs- und Speichereinrichtung bewirkende Software-Komponente. Die im wesentlichen Daten verwertende Komponente, im folgenden Client, ist in diesem Zusammenhang z.B. die Visualisierung der vom Client aufgenommen Daten bewirkende Software-Komponente.

Nachteilig bei bekannten Prozeßvisualisierungssystemen ist jedoch, daß der Client oder eine übergeordnete Container-applikation einen den Server bezeichnenden Code enthält, wobei dieser Code die Nutzung der Dienste des Servers - z.B. den Zugriff auf die vom Server gelieferten Daten - ermöglicht.

Dieser Nachteil bedingt, daß ein als Software-Komponente ausgebildeter Client bisher nicht unabhängig von einem als Software-Komponente ausgebildeten Server realisierbar ist.

Die Aufgabe der vorliegenden Erfindung besteht folglich darin, einerseits diesen Nachteil zu umgehen und andererseits ein Daten- bzw. Informationsübertragungssystem der eingangs genannten Art anzugeben, bei eine Daten verwertende Komponente unabhängig von einer Daten liefernden Komponente realisierbar ist.

Diese Aufgabe wird mittels eines Daten- bzw. Informationsübertragungssystem zur Visualisierung von Daten, insbesondere Prozeßdaten, oder Ereignissen, mit einer Verarbeitungs- und Speichereinrichtung, insbesondere einem Mikroprozessor mit einem zugeordneten Speicher, mit einer von dieser ansteuerbaren Visualisierungseinrichtung, insbesondere einem Bildschirm, und mit Mitteln zum Anschluß externer Sensoren oder Aktoren eines gesteuerten und/oder überwachten technischen Prozesses, dadurch gelöst,
- daß zumindest eine im wesentlichen Daten liefernde Komponente, im folgenden Server, zumindest eine im wesentlichen Daten verwertende Komponente, im folgenden Client, und zumindest eine Kontroll-, Leit- oder Verteilkomponente, im folgenden Außensteuerung, vorgesehen sind,
- daß zwischen Client und Server keine direkte Daten- oder Informationsaustauschmöglichket besteht, so daß der Daten- oder Informationsaustausch mittels der Außensteuerung bewirkt wird, indem der Daten- oder Informationsaustausch ausschließlich zwischen Server und Außensteuerung einerseits und Außensteuerung und Client andererseits stattfindet,
- daß mittels des Servers Daten oder Informationen aus dem Prozeß aufnehmbar sind und wobei mittels des Clients die Daten oder Informationen visualisierbar sind,
- daß zumindest der Client als Softwarekomponente mit mindestens einer Außenschnittstelle, im folgenden Property, ausgebildet ist,
- daß der Daten- oder Informationsaustausch von oder zu dem Client ausschließlich mittels des Properties erfolgt und daß der Daten- oder Informationsaustausch die Ausführung eines der Property zugeordneten Codes bewirkt.

Bei einem derartig ausgestalteten Daten- bzw. Informationsübertragungssystem kann jede Daten verwertende Komponente, jeder Client, völlig unabhängig von den anderen beteiligten Komponenten, der Kontroll-, Leit- oder Verteilkomponente - Außensteuerung - bzw. der Daten liefernden Komponente - Server - realisiert werden.

Eine vorteilhafte Weiterbildung der Erfindung besteht ferner darin, daß bei dem Daten- bzw. Informationsübertragungssystem die Außensteuerung Mittel zur Identifikation der erreichbaren Clients aufweist, daß für die Außensteuerung eine Referenz auf die erreichbaren Clients abspeicherbar ist. Die Referenzen der erreichbaren Clients sind dabei benutzerselektierbar aufbereitbar. Ferner sind anhand einer benutzerselektierbaren Referenz die Properties des über die jeweilige Referenz erreichbaren Clients zugänglich, so daß die Kommunikationsbeziehung zwischen Außensteurung und Client festlegbar ist. Dies wird dadurch ermöglicht, daß für die Außensteuerung für jede für einen erreichbaren Client zugängliche Property zumindest ein übermittelbares Datum oder eine Referenz auf ein übermittelbares Datum abspeicherbar ist. Dabei sind die o.g. Mittel zur Identifikation insofern unabhängi vom Container, als Dienste Verwendung finden, die ein Container standardmäßig aufweist bzw. zur Anwendung bereitstellt, so daß grundsätzlich beliebige Container zur Anwendung kommen können.

Die Erfindung kann z.B. vorteilhaft in einem Prozeßvisualisierungssystem zur Visualisierung der Zustände eines technischen Prozesses eingesetzt werden.

Weitere Merkmale, Vorteile und Anwendungsmöglichkeiten der vorliegenden Erfindung ergeben sich aus den Unteransprüchen, der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Patentansprüchen oder deren Rückbeziehung.

Dabei zeigen:
- FIG 1: die vereinfachte schematische Darstellung ein Daten- bzw. Informationsübertragungssystem,
- FIG 2: die schematisch Darstellung die Kommunikationsbeziehung zwischen den Komponenten des Daten- bzw. Informationsübertragungssystems,
- FIG 3: die schematisch Darstellung einer bekannten Interaktion zwischen zwei Software-Komponenten,
- FIG 4: die schematische Darstellung einer Interaktion zwischen zwei Software-Komponenten gemäß der Erfindung,
- FIG 5: die schematische Darstellung einer Interaktion zwischen zwei Software-Komponenten gemäß der Erfindung anhand einer konkreten Visualisierungsaufgabe,
- FIG 6: eine Eingabemaske zur Festlegung des Datenflusses zwischen zwei Software-Komponenten und
- FIG 7: die schematische Darstellung einer Interaktion mit einer komplexeren Visualisierungskomponente gemäß der Erfindung anhand einer konkreten Visualisierungsaufgabe.

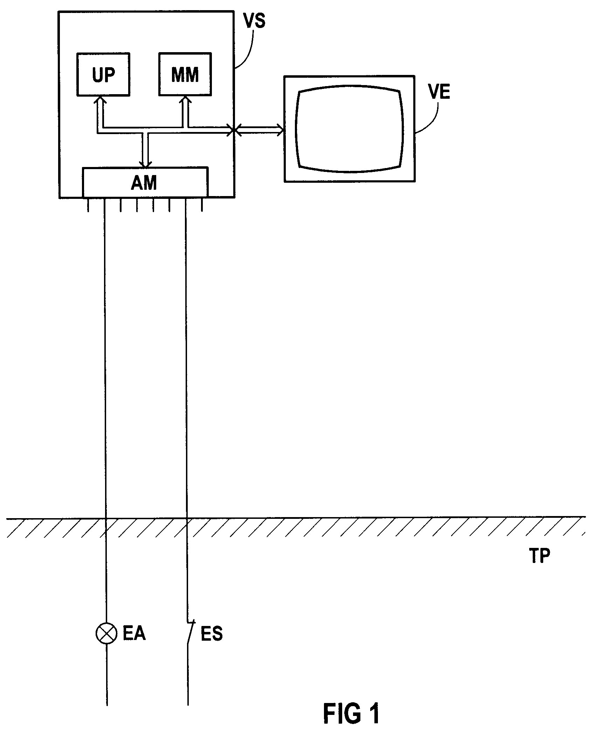

Gemäß FIG 1 weist das Daten- bzw. Informationsübertragungssystem zumindest eine Verarbeitungs- und Speichereinrichtung VS sowie eine von dieser ansteuerbare Visualisierungseinrichtung VE auf. In der Darstellung gemäß FIG 1 weist die Verarbeitungs- und Speichereinrichtung VS selbst zumindest einem Mikroprozessor UP und einen Speicher MM auf. Der Mikroprozessor UP bewirkt die Ausführung des im Speicher MM abgespeicherten Codes. Zu dem im Speicher MM abgespeicherten Code gehört zumindest auch der Code der Software-Komponenten Client CL, Server SV und Außensteuerung AS. Ferner sind im Speicher MM auch die zwischen den Außensteuerung AS und Client CL einerseits und Außensteuerung AS und Server SV andererseits übermittelbaren Daten und Informationen speicherbar. Zum Zugriff des Mikroprozessors UP auf den Speicher MM besteht eine Kommunikationsmöglichkeit zwischen Mikroprozessor UP und Speicher MM.

Ferner besteht eine Kommunikationsmöglichkeit zwischen der Verarbeitungs- und Speichereinrichtung VS und der Visualisierungseinrichtung VE, die in der Darstellung gemäß FIG 1 als Bildschirm VE ausgebildet ist. Die Visualisierungseinrichtung VE ist durch die Verarbeitungs- und Speichereinrichtung VS ansteuerbar, so daß mit dem Daten- bzw. Informationsübertragungssystem die Visualisierung von Daten, insbesondere Prozeßdaten, oder Ereignissen eines gesteuerten und/oder überwachten technischen Prozesses TP realisierbar ist.

Die Kommunikation mit dem technischen Prozeß TP ist dabei durch Mittel zum Anschluß externer Sensoren ES oder Aktoren EA des technischen Prozesses TP realisiert. Als Mittel zum Anschluß externer Sensoren ES bzw. externer Aktoren seien dabei beispielsweise Digital- oder Analogeingabebaugruppen bzw. Digital- oder Analogausgabebaugruppen einer speicherprogrammierbaren Steuerung genannt.

Dabei ist die Erfindung selbstverständlich nicht auf Datenquellen der o.g. Art beschränkt; tatsächlich kann die Erfindung auch verwendet werden, um Daten aus beliebigen Datenquellen, z.B. auch einer Benutzerverwaltung - d.h. einer Software-Applikation -, zu lesen. Das gelesene Datum ist in einem solchen Falle dann die Berechtigung für eine Aktion (boolsche Property: Aktion darf/darf nicht ausgeführt werden).

In FIG 1 ist der technische Prozeß TP nicht im Detail dargestellt. Lediglich exemplarisch ist als externer Aktor EA eine Leuchte EA und als externer Sensor ES ein Taster ES dargestellt Es ist jedoch selbstverständlich, daß im Zusammenhang mit der vorliegenden Beschreibung der Begriff externer Aktor EA jede Art von Aktor, z.B. Motoren oder drehzahlveränderliche Antriebe, und der Begriff externer Sensor ES jede Art von Sensor, z.B. Grenzwertmelder und Meßwertaufnehmer jeglicher Art, bezeichnet.

In diesem Zusammenhang sei auch darauf hingewiesen, daß die Verarbeitungs- und Speichereinrichtung VS durch die Zentraleinheit einer speicherprogrammierbaren Steuerung realisiert sein kann, die mit Ein- bzw. Ausgabebaugruppen, die zum Einsatz mit der jeweiligen Zentraleinheit vorgesehen sind, in kommunikativer Verbindung steht.

Im Hinblick auf FIG 1 sei zusätzlich darauf hingewiesen, daß auch folgende, in FIG 1 nicht dargestellte Konstellation vorliegen kann: Eine erste Verarbeitungs- und Speichereinrichtung VS, beispielsweise die Zentraleinheit einer speicherprogrammierbaren Steuerung mit Anschlußmitteln AM zum Anschluß der Prozeßperipherie EA, ES ist kommunikativ mit einer zweiten Verarbeitungs- und Speichereinrichtung, z.B. einem Personal-Computer, verbindbar, wobei die zweite Verarbeitungs- und Speichereinrichtung zur Ansteuerung der Visualsierungseinrichtung vorgesehen ist. Das erfindungsgemäße Daten- bzw. Informationsübertragungssystem umfaßt in einer solchen Konstellation zwei Verarbeitungs- und Speichereinrichtungen, wobei die zweite, zusätzliche Verarbeitungs- und Speichereinrichtung im wesentlichen aufgrund der für die jeweils gewählte Plattform zur Verfügung stehenden Software-Applikationen oder -Werkzeuge zum Einsatz kommt. Außerdem ist mit zwei Verarbeitungs- und Speichereinrichtungen eine echte Entkopplung zwischen Steuerung bzw. Visualisierung des technischen Prozesses TP möglich.

Grundsätzlich ist jedoch jedes Computer- oder Rechnersystem, das mit industrietauglicher Peripherie verbindbar ist, für das erfindungsgemäße Daten- bzw. Informationsübertragungssystem geeignet. Die Verbindung zu der industrietauglichen Peripherie kann dabei auch über beliebige Kommunikationsverbindungen, insbesondere Netzwerke, realisiert sein, so daß an das Computer- oder Rechnersystem selbst keine besonderen Anforderungen hinsichtlich seiner Industrietauglichkeit zu stellen sind.

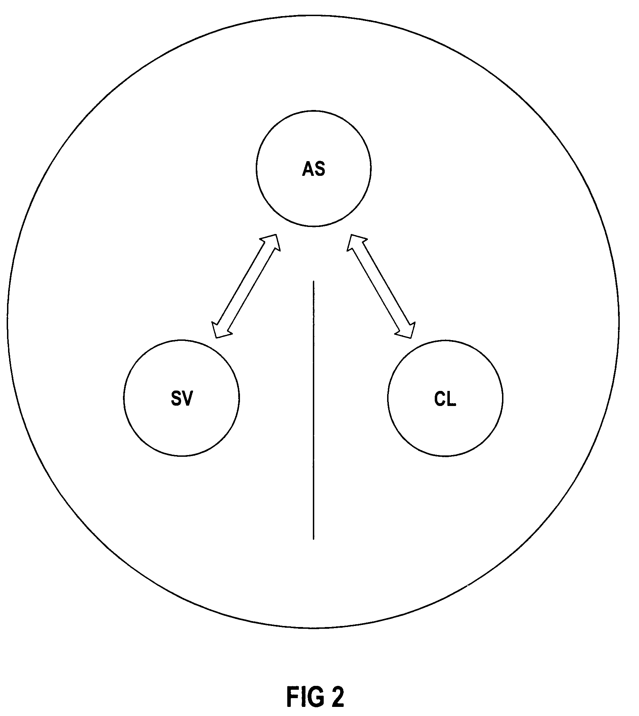

In FIG 2 ist schematisch die Kommunikationsbeziehung zwischen den Komponenten, der im wesentlichen Daten liefernde Komponente SV, dem Server SV, der im wesentlichen Daten verwertenden Komponente CL, dem Client CL, und der Kontroll-, Leit- oder Verteilkomponente AS, der Außensteuerung AS, des Daten- bzw. Informationsübertragungssystem dargestellt.

Dabei deuten die beiden Doppelpfeile an, daß der Daten- oder Informationsaustausch mittels der Außensteuerung AS bewirkt wird, indem der Daten- oder Informationsaustausch ausschließlich zwischen Server SV und Außensteuerung AS einerseits und Außensteuerung AS und Client CL andererseits stattfindet. Mit der Linie zwischen Client CL und Server SV wird verdeutlicht, daß zwischen Client CL und Server SV keine direkte Daten- oder Informationsaustauschmöglichket besteht.

Insbesondere bei einem Daten- bzw. Informationsübertragungssystem der eingangs genannten Art handelt es sich bei dem vorstehend beschriebenen Client CL um ein Visualisierungsobjekt CL, welches - da als Software-Komponente, als Objekt realisiert - mehrfach instantiierbar ist, so daß ein Visualisierungsobjekt CL, z.B. zur Visualisierung einer Kontrolleuchte, im Rahmen des Daten- bzw. Informationsübertragungssystems mehrfach verwendbar ist. Auch wenn in FIG 2 nur ein Client CL dargestellt ist, kann in einem Daten- bzw. Informationsübertragungssystem eine Vielzahl von Clients CL zur Anwendung kommen.

Der Server, der in FIG 2 als separate Komponente dargestellt ist, braucht nicht notwendigerweise als Software-Komponente ausgeführt zu sein; im einfachsten Fall fungiert der Speicher MM der Verarbeitungs- und Speichereinrichtung VS als Server SV; z.B. indem das sogenannte Prozeßabbild eines durch eine speicherprogrammierbare Steuerung gesteuerten und/oder überwachten technischen Prozesses TP im Hauptspeicher MM der Zentraleinheit der speicherprogrammierbaren Steuerung abgespeichert ist.

Separate Software-Komponenten auch für den Server SV sind grundsätzlich im Sinne einer Datenkapselung - da häufig ein direkter Zugriff auf im Speicher MM vorgehaltene Daten vermieden werden soll - insbesondere aber dann sinnvoll, wenn vor der eigentlichen Visualisierung der Daten eine Vor- oder Weiterverarbeitung der Daten erforderlich ist. Eine derartige Vor- oder Weiterverarbeitung erfolgt beispielsweise mit einem als Software-Komponente realisierten Regler, zur Regelung externer technischer Größen.

In einem solchen Falle ist der als Software-Komponente realisierte Regler ein Server SV gemäß der schematischen Darstellung in FIG 2. Server SV dieser Art können in einem Daten- bzw. Informationsübertragungssystem gleichfalls - analog zu den Clients - mehrfach vorhanden sein, entweder, indem z.B. mehrere Regler SV vergleichbarer Funktionalität mehrfach instantiiert und damit im System mehrfach vorhanden sind, oder indem mehrere Regler SV unterschiedlicher Funktionalität Verwendung finden.

Eine grundsätzlich analoge Konstellation zu den soeben beschreibenen Verhältnissen liegt dann vor, wenn der als Software-Komponente realiserte Regler z.B. als sog. Funktionsbaustein einer speicherprogrammierbaren Steuerung realisiert ist. Ein derartiger Regler-Funktionsbaustein wird dann beispielsweise auf einer im Zusammenhang mit FIG 1 beschrieben ersten Verarbeitungs- und Speichereinrichtung VS ausgeführt, wobei die Ausgangswerte des Reglers in einem Speicher vorgehalten werden. Aus diesem Speicher werden die Daten von einem auf der zweiten Verarbeitungs- und Speichereinrichtung realisierten Server SV abgeholt, indem ein lesender Zugriff auf die jeweiligen Speicherbereiche erfolgt.

Weitere Beispiele für in einem Daten- bzw. Informationsübertragungssystem verwendbare Server SV sind z.B. die bereits genannten Regler. Darüber hinaus sind z.B. Grenzwertmelder aber auch eine Prozeßdatenaufbereitung zu Protokollierungszwecken als Server SV im Sinne der vorliegenden Beschreibung realisierbar. Darüber hinaus sind jedoch gleichfalls auch Server realisierbar, die keine eigene Verarbeitungsleistung anbieten und daher im wesentlichen zur Datenkapselung und zum Transfer der gepakselten Daten vorgesehen sind.

Beispiele für in einem Daten- bzw. Informationsübertragungssystem verwendbare Clients CL sind z.B. Visualisuerungsobjekte CL zur Visualisierung von digitalen bzw. analogen Größen, Visualisierungsobjekte CL zur Visualisierung von Meßinstrumenten, Visualisierungsobjekte CL zur Darstellung von Klartextmeldung, z.B. zur Darstellung von Fehlermeldungen, Visualisierungsobjekte CL welche den Status - An/Aus, Vorwärts/Rückwärts, etc. - einer Komponente des technischen Prozesses TP durch Farbumschlag darstellen, etc.

Theoretisch ist neben einer Vielzahl von Clients CL bzw. Servern SV in einem Daten- bzw. Informationsübertragungssystem sogar eine Vielzahl von Außensteuerungen AS in ein und demselben Daten- bzw. Informationsübertragungssystem denkbar, etwa wenn mittels einer ersten Außensteuerung AS die Daten- und Informationsübertragung zwischen sämtlichen als Server SV realisierten Reglern SV und den betreffenden, als Clients CL realisierten Visualisierungsobjekten CL bewirkt wird, mittels einer zweiten Außensteuerung AS die Daten- und Informationsübertragung zwischen sämtlichen Grenzwertmeldern SV und den betreffenden Visualisierungsobjekten CL und durch eine weitere Außensteuerung AS die Daten- und Informationsübertragung zwischen den verbleibenden Servern SV und den zugehörigen Visualisierungsobjekten CL bewirkt wird.

Andererseits besteht ein häufiger Anwendungsfall darin, daß eine Außensteuerung pro zu visualisierendem Bild (in dem jeweils ein Anlagenteil des technischen Prozesses TP visualisiert ist) vorgesehen ist. Wird von einem Bild zum nächsten geschaltet, wird die zugehörige Außensteuerung aktiviert bzw. deaktiviert, um keine Daten, Prozeßwerte, für Bilder zu lesen, die am Bildschirm nicht sichtbar sind.

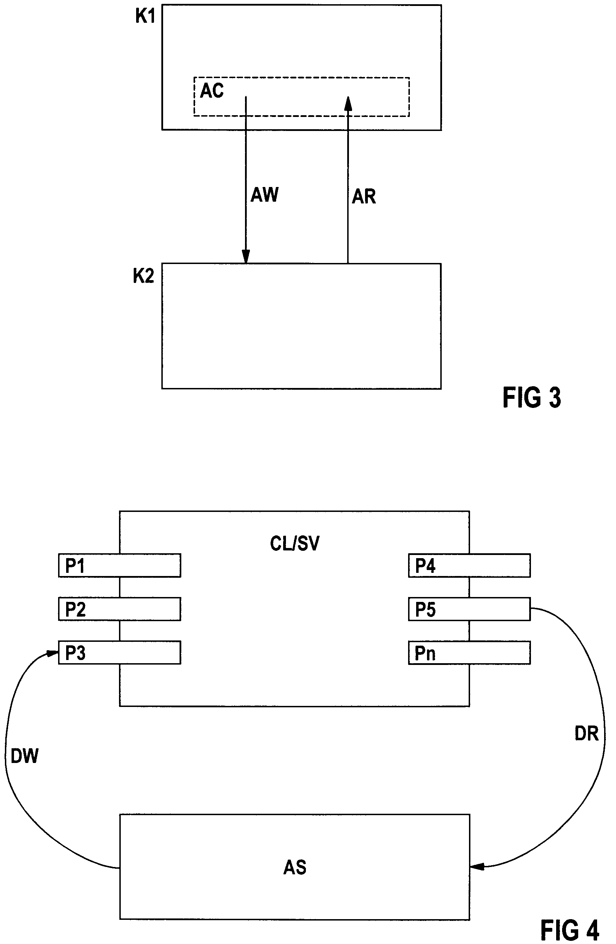

In FIG 3 ist die bekannte Interaktion zwischen zwei Software-Komponenten K1, K2 schematisch dargestellt. Die Richtung der Pfeile beschreibt dabei lediglich den Datenfluß; für beide Richtungen des Datenflusses wird die jeweilige Aktion von der Software-Komponente K1 ausgelöst, die zum Auslösen der jeweiligen Aktion einen spezifischen Aufruf-Code AC aufweist. Der Aufruf-Code AC ist insofern spezifisch, als er einerseits die Datenflußrichtung und andererseits die Quelle oder das Ziel des Datenflusses explizit angibt. Bei einem schreibenden Aufruf AW werden Daten oder Informationen ausgehend von der Komponente K1 an die Komponente K2 übertragen. Bei einem lesenden Aufruf AR werden Daten oder Information von der Komponenten K2 gelesen und an die Komponente K1 übertragen. Obwohl die Software-Komponente K1 auch bisher - mit Ausnahme des Aufruf-Codes AC - im Hinblick auf hohe Flexibilität und erweiterter Wiederverwendbarkeit realisierbar ist, verbleibt doch der an die jeweilige Kommunikationsbeziehung anzupassende Teil, der in FIG 3 als Aufruf-Code AC dargestellt ist.

Außerdem ist eine solchermaßen realisierte Software-Komponente K1 nicht mehr von außen beinflußbar. Sollen die visualisierten Werte z.B. von außen über eine manuelle Eingabe vorgegeben werden, können diese nicht direkt an die Software-Komponente K1 übermittelt werden.

In der Rückübertragung auf das Daten- bzw. Informationsübertragungssystem mit dem die Erfindung verdeutlicht wird, entspricht die Komponente K1 gemäß FIG 3 z.B. einer im wesentlichen Daten verwertenden Komponenten K1, einem Client CL. Damit wird der Nachteil des Standes der Technik besonders deutlich, denn für jeden Client ist - ohne Weiterbildung des Standes der Technik - die Kommunikationsbeziehung explizit anzugeben, nämlich durch den für jeden einzelnen Client CL eines Daten- bzw. Informationsübertragungssystems spezifischen Aufruf-Code AC, der die jeweiligen Kommunikationsbeziehungen zwischen Client CL und den für den jeweiligen Client CL bestimmten Daten und Informationen festlegt.

In FIG 4 ist schematisch dargestellt, auf welche Weise gemäß der Erfindung dieses Nachteile des Standes der Technik vermieden werden. Eine erste Software-Komponente, entweder ein Client-Objekt CL oder ein Server-Objekt SV interagiert mit einer Außensteuerung. Die prinzipielle Gleichwertigkeit des Konzepts sowohl für eine Interaktion zwischen Außensteuerung AS und Client CL als auch zwischen Außensteurung und Server ist ein weiterer Vorteil der Erfindung. Die Beschreibung wird im folgenden für eine Interaktion, eine Daten- oder Informationsübertragung, zwischen Außensteuerung AS und Client CL, z.B. einem Visualisierungsobjekt CL, fortgesetzt. Gemäß FIG 4 ist der Client CL als Softwarekomponente mit Außenschnittstellen P1...Pn, den sogenannten Properties P1...Pn, ausgebildet ist. Der Daten- oder Informationsaustausch von oder zu dem Client CL erfolgt ausschließlich mittels der Properties P1...Pn Eine Besonderheit der verwendeten Software-Komponenten besteht darin, daß ein Daten- oder Informationsaustausch mittels eines Properties P1...Pn die Ausführung eines der Property P1...Pn zugeordneten Codes bewirkt. Dies ist dann der Fall, wenn die Software-Komponenten, in diesem Falle die Clients CL, als sogenannte ActiveX-Controls bzw. OCX-Komponenten realisiert sind, die genau diese Funktionalität bewirken.

Mit dieser Funktionalität ist sichergestellt, daß ein bei einem Client CL eingehendes Datum die unmittelbare Ausführung eines spezifischen Codes bewirkt. Im Falle eines schreibenden Datentransfers DW, mit dem ein Datentransfer von der Außensteuerung AS zum Client CL an dessen Property P3 erfolgt, bewirkt das Vorliegen eines Datums für den Property P3 eine unmittelbare Ausführung eines der Property P3 zugeordneten Codes des Clients CL. Im Falle eines als Visualisierungsobjekt ausgebildeten Clients CL wird dieser spezifische Code in erster Linie die Aus- bzw. Bewertung des transferierten Datum sowie die nachfolgende graphische Visualisierung und mithin die entsprechende Ansteuerung der Visualisierungseinrichtung VE umfassen. Im Falle eines lesenden Datentransfers DR, mit dem ein Datentransfer vom Client CL von dessen Property P5 zur Außensteuerung AS erfolgt, bewirkt das Auslesen eines Datums der Property P5 eine unmittelbare Ausführung eines der Property P3 zugeordneten Codes des Clients CL. Das kann z.B. die Bereitstellung des zu transferierenden Datums oder die Bereitstellung eines Folgedatums für den nächsten Datentransfer sein.

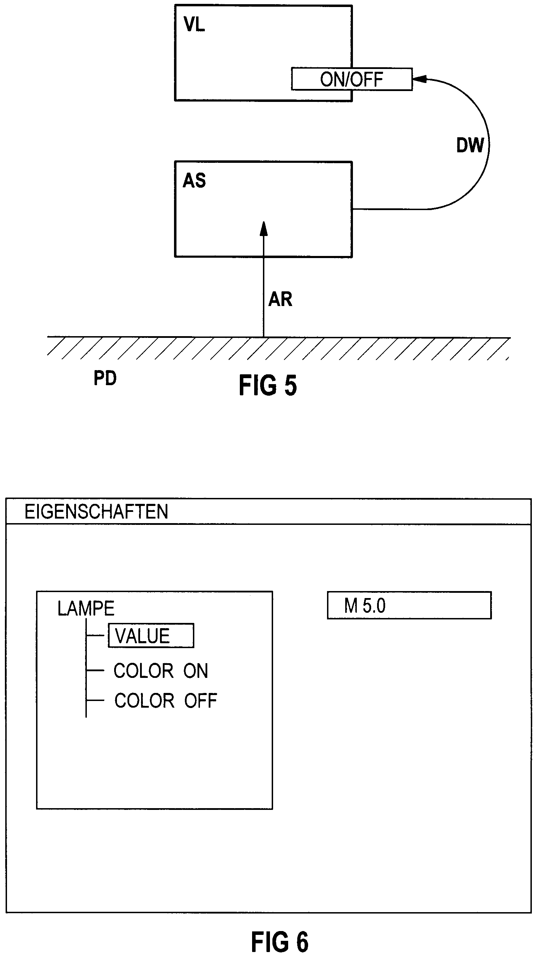

Anhand von FIG 5 soll nun ein konkreter Anwendungsfall dargestellt werden. Mit einem als Client CL ausgebildeten Visualisierungsobjekt VL soll auf der Visualisierungseinrichtung VE die graphische Darstellung einer Leuchte erzeugt werden, die einen Zustand des technischen Prozesses TP farbcodiert darstellt, z.B. Zustand A: rot, komplementärer Zustand A': grün.

Da das Visualisierungsobjekt VL zur Darstellung eines binären Zustands vorgesehen ist, ist als Außenschnittstelle des Visualisierungsobjektes VL ein einziges Property P, in FIG 5 mit ON/OFF bezeichnet, ausreichend.

Die Außensteuerung AS transferiert das den entsprechenden Prozeßzustand angebende Datum an die Property ON/OFF des Visualisierungsobjektes VL. Die Außensteuerung AS, die im Beispiel gemäß FIG 5, im Gegensatz zum Visualisierungsobjekt VL nicht als ActiveX-Control ausgebildet sein muß, kann in Form einer konventionellen" Routine mit sequentieller Ausführung des betreffenden Programmcodes ausgebildet sein. So führt die Außensteuerung z.B. zumindest zyklisch einen lesenden Aufruf AR durch, mit dem aus den Prozeßdaten, z.B. dem Prozeßabbild des technischen Prozesses TP, der zu visualisierende Prozeßstatus ausgelesen wird, durch. Für die Außensteuerung AS ist also - wie bisher allgemein üblich - im betreffenden Code die Adresse des Datum, welches innerhalb der Gesamtheit der Prozeßdaten PD den zu visualisierenden Prozeßzustand angibt explizit hinterlegt.

Wenn dagegen auch die Außensteuerung AS als ActiveX-Control ausgebildet ist, besteht die Möglichkeit, sie mittels der sog. Drag-And-Drop-Technik einem Container hinzuzufügen, auf den dann die Außensteuerung mittels der vom Container aufgrund seiner Eigenschaft, Container zu sein, angebotenen Dienste Zugriff hat, um z.B. weitere im Container enthaltene ActiveX-Controls zu ermitteln.

Zwischen den Prozeßdaten PD und der Außensteuerung AS besteht als im Beispiel gemäß FIG 5 ein fester Zusammenhang. Im Gegensatz dazu besteht ein solcher Zusammenhang weder zwischen dem Visualisierungsobjekt VL und den Prozeßdaten PD, noch zwischen dem Visualisierungsobjekt VL und der Außensteuerung AS. Eine feste Kopplung zwischen Visualisierungsobjekt VL und Prozeßdaten PD ist bereits durch die Einführung der Außensteuerung AS unnötig geworden. Würde jetzt die feste Kopplung allerdings zwischen Visualisierungsobjekt VL und Außensteuerung AS wieder eingeführt, wäre mit der Einführung einer als bloße Schnittstelle fungierenden Außensteuerung AS nur eine Verlagerung erreicht. Die eigentlich beabsichtigte Realisierung Daten verwertender Komponenten VL unabhängig von Daten liefernden Komponenten SV wäre damit nicht erreicht.

Die beabsichtigte Unabhängigkeit wird durch die Verwendung des Properties ON/OFF erreicht. Da die Unabhängigkeit der Realisierung zwangsläufig erfordert, daß beim Entwurf des Visualisierungsobjektes VL keine Kenntnisse über Aufbau, Layout und Funktionalität der Außensteuerung AS und umgekehrt einfließen, bleibt zunächst offen, auf welche Weise Quelle und Ziel der erforderlichen Daten- und Informationsübertragungen vereinbart werden.

Da die Erfindung z.B. vorteilhaft in einem Prozeßvisualisierungssystem oder für Inbetriebsetzungsmasken, Wartungsanzeigen, etc. eingesetzt werden kann, soll dies im Hinblick auf ein derartiges Prozeßvisualisierungssystem erläutert werden.

Für ein Prozeßvisualisierungssystem ist üblicherweise eine interaktive Entwurfsmöglichkeit der darzustellenden Bildschirmmasken vorgesehen. Der Nutzer wählt sich aus einer vorgegebenen und ggfs. interaktiv erweiterbaren Bibliothek die darzustellenden Bildschirmelemente aus. Dabei sind zumindest einige der auswählbaren Bildschirmelemente Visualisierungsobjekte VL der vorstehend beschriebenen Art.

Der Benutzer wählt die jeweils erforderlichen Visualisierungsobjekte VL aus und positioniert diese auf der zur späteren Anzeige vorgesehenen Bildschirmmaske.

Zur Verbindung der Visualisierungsobjekte VL mit dem technischen Prozeß TP, bzw. mit dessen Prozeßperipherie, ist auf der jeweiligen Bildschirmmaske ferner ein diese Verbindung ermöglichendes Objekt, die Außensteuerung AS, zu plazieren.

Jeweils mit dem Plazieren eines Visualisierungsobjektes VL auf der Bildschirmoberfläche kennt" die hier als Container fungierende Bildschirmoberfläche das plazierte und damit in ihr - in dem als Container fungierenden Bildschirmoberflächenobjekt - enthaltene Visualisierungsobjekt VL.

Da auch die Außensteuerung AS auf der Bildschirmoberfläche zu plazieren ist, kennt das Bildschirmoberflächenobjekt darüber hinaus auch die Außensteuerung AS. Da die Außensteuerung AS konzeptionell derart ausgelegt ist, den Datentransfer von und zu den Visualisierungsobjekten VL zu ermöglichen, enthält die Außensteuerung zumindest Code, um den Container - also die Bildschirmoberfläche - in dem sie enthalten ist, abzufragen.

Mit dieser Funktionalität fragt die Außensteuerung AS den Container - die Bildschirmoberfläche - nach in ihm enthaltenen Visualisierungsobjekten VL ab und bekommt die im Container enthaltenen Visualisierungsobjekte VL bzw. eine Referenz auf deren Instanzennamen zurückgeliefert.

Wenn der Benutzer die Interaktion zwischen der Außensteuerung AS und den Visualisierungsobjekten VL festlegen will, aktiviert er - entweder während des interaktiven Entwurfsprozesses der Bildschirmmaske oder im Anschluß an deren Entwurf - die Außensteuerung AS z.B. mit der Maus, woraufhin sich ein Dialogfeld öffnet, in dem die für die Außensteuerung AS erreichbaren Visualisierungsobjekte VL - also die im Container enthaltenen und folglich auf der Bildschirmoberfläche plazierten Visualisierungsobjekte VL - im Klartext angezeigt werden.

Darauf kann der Benutzer eines der Visualisierungsobjekte VL auswählen und bekommt zu dem jeweils ausgewählten Visualisierungsobjekt VL die für dieses Visualisierungsobjekt VL zugänglichen Properties" P angeboten, aus denen der Benutzer wiederum eines auswählt.

Im Beispiel gemäß FIG 5 ist auf der Bildschirmoberfläche neben der Außensteuerung AS zumindest das Visualisierungsobjekte VL zur graphischen Darstellung einer Leuchte plaziert. Bei einer entsprechenden Selektion der Außensteuerung AS wird dem Benutzer also zumindest das Visualisierungsobjekt VL zu Auswahl angeboten. Im Falle einer Auswahl des Visualisierungsobjektes VL wird daraufhin zumindest die Property ON/OFF des Visualisierungsobjektes VL zur weiteren Auswahl angeboten. Die Auswahl wird dem Benutzer dabei in Form der heute gebräuchlichen Pull-Down- oder Drop-Down-Menues - wie exemplarisch in FIG 6 dargestellt - angeboten, die bedarfsweise um Strukturinformationen, mit denen baumartige Strukturen und die damit bedingten hierarchischen Abhängigkeiten darstellbar sind, ergänzt werden.

Nach Auswahl der gewünschten Property ON/OFF gibt der Benutzer in der nach der Auswahl zugänglichen Eingabemaske die Adresse des Datums an, das z.B. in die entsprechende Property ON/OFF geschrieben werden soll. Im Falle eines eine Leuchte darstellenden Visualisierungsobjektes VL, das lediglich einen binären Zustand symbolisieren soll, ist für das Visualisierungsobjekt VL zumindest ein Property ON/OFF vorgesehen, das einen Zustand 0 oder 1 ausdrücken kann. Dieses Property ON/OFF wird vom Benutzer ausgewählt und beispielsweise mit einer Adresse des Datenbereiches des visualisierten Prozesses TP verbunden, so daß die am Bildschirm VE dargestellte Leuchte tatsächlich mit Farbumschlag reagiert, wenn an der entsprechenden Adresse eine 1 steht und der Farbumschlag wieder rückgängig gemacht wird, wenn an der entsprechenden Adresse eine 0 steht.

Wenn komplexere Sachverhalte visualisiert werden, wie beispielsweise das Ausgangsverhalten eines PID-Reglers, kann der Benutzer für diesen Zweck vordefinierte Visualisierungsobjekte CL auf seiner Benutzeroberfläche plazieren. Ein solches, für die Visualisierung des Ausgangsverhaltens eines Reglers vorgesehenes Visualisierungsobjekt CL sei das Regler-Visualisierungsobjekt VR, das als im wesentlichen Daten verwertende Komponente auf der Benutzeroberfläche plaziert wird.

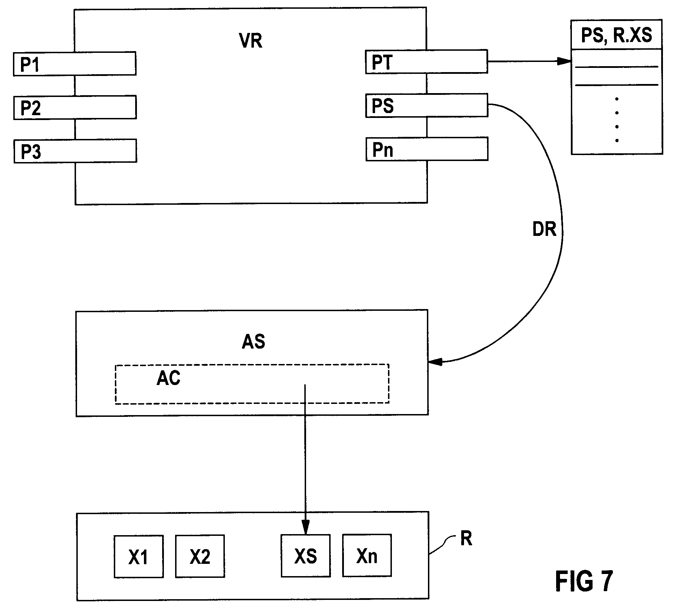

Dieses Regler-Visualisierungsobjekt VR soll die Daten eines Reglers R anzeigen bzw. beeinflussen. Der Datentransfer zwischen Visualisierungsobjekt VR und Regler R wird mittels der gleichfalls auf der Benutzeroberfläche plazierten Außensteuerung AS bewirkt. Der weitere Sachverhalt wird mit Bezug auf die Darstellung gemäß FIG 7 erläutert.

Für den Datentransfer stellt das Visualisierungsobjekt VR Properties P1...Pn zur Verfügung, mit denen dem Visualisierungsobjekt VR der aktuelle Ausgangswert des Reglers R übermittelbar ist, mit dem vom Visualisierungsobjekt VR dem Regler R ein Sollwert vorgebbar ist und mit dem, ausgehend vom Visualisierungsobjekt VR, dem Regler R die üblichen Regelkonstanten vorgegeben werden können.

Da diese Anzahl der Properties P1...Pn für sämtliche Instanzen eines Regler-Visualisierungsobjekt VR z.B. des Typs PID identisch ist, geht der Benutzer beim Verknüpfen der Visualisierungsobjekte VR nicht mehr wie zuvor beschrieben vor, sondern er selektiert nunmehr das Visualisierungsobjekt VR selbst und gibt dem Visualisierungsobjekt VR die Bezeichnung der Reglerinstanz - also z.B. PID4711" - vor.

Der Regler R besitzt eine korrespondierende Anzahl von Parametern X1...Xn , mit denen dem Regler R der Sollwert und die Reglerkonstanten vorgegeben werden können, und mit denen der Regler R den aktuellen Ausgangswert ausgeben kann.

Jetzt bleibt nur noch die virtuelle Verbindung zwischen den Properties P1...Pn des Regler-Visualisierungsobjekt VR und den Parametern X1...Xn des Reglers R.

Dazu gibt das Visualisierungsobjekt VR eine als Tabelle T oder als Referenz auf eine Tabelle T ausgebildete Property PT aus, in der die Verknüpfung der Properties P der Visualisierungskomponente VR mit den Parametern X des Reglers R angegeben ist.

Enthält die Visulisierungskomponente VR z.B. ein Property P für den Sollwert, muß dieser Sollwert an den entsprechenden Parameter X des Reglers R übertragen werden. Wenn die Property P der Visualisierungskomponente VR für den Sollwert mit PS bezeichnet wird und auf Seiten des Reglers R der Parameter für den Sollwert mit XS bezeichnet wird, lautet der entsprechende Eintrag der Tabelle T z.B. [PS, R.XS]. Dabei gibt dieser Eintrag an, daß eine zum Datentransfer vorgesehene Verknüpfung zwischen dem Property PS des Visulisierungskomponente VR und dem Parameter XS des Reglers R besteht.

Beim Ablauf der Visualisierung zur Laufzeit bzw. zu dem Zeitpunkt wenn in den Laufzeitmodus geschaltet wird, holt sich die Außensteuerung AS jeweils die im Container befindlichen Elemente. Im Falle des einfachen Visualisierungsobjektes CL, wie z.B. der Lampe VL gemäß FIG 5, bei der der Außensteuerung AS direkt die Adresse der darzustellenden Information angegeben wurde, überwacht die Außensteuerung AS zur Laufzeit den jeweiligen Datenbereich PD und gibt bei einer Veränderung des überwachten Datenbereichs PD das geänderte Datum an das Visualisierungsobjekt VL weiter, wobei die Weitergabe des Datums dem Aufruf einer Set-Property-Methode entspricht, die damit gleichzeitig eine Aktion bei dem Visualisierungsobjekt VL, dessen Property gesetzt wurde, auslöst, in diesem Falle also z.B. den gewünschten Farbumschlag.

Zu dem Zeitpunkt, zu dem in den Laufzeitmodus geschaltet wird, holt sich die Außensteuerung AS - wie bereits weiter oben erläutert - jeweils die im Container befindlichen Objekte. Bei jedem Objekt wird überprüft, ob es eine als Tabelle T ausgebildete Property PT mit Verbindungsinformationen aufweist. Dies kann z.B. durch eine Namenskonvention geschehen, indem die als Tabelle T ausgebildete Property PT mit Verbindungsinformationen mit einem vordefinierten Namen, z.B. ConnectionTable, belegt wird.

Im Falle eines einfachen Visualisierungsobjektes VL ist eine derartige Property PT nicht vorhanden; im Falle des komplexeren Visualisierungsobjektes VR erkennt die Außensteuerung AS die als Tabelle T ausgebildete Property PT und wertet die Einträge der Tabelle T aus. Jeder Eintrag der Tabelle führt dabei zu einer Verbindung einer Property P mit des Visualisierungsobjektes VR mit einem entsprechenden Prozeßwert X.

Der Eintrag [PS, R.XS] führt also z.B. zu einer Verbindung der Property PS mit dem Prozeßwert R.XS, der dem Regler R zuzuführen ist. Nach der Interpretation der Einträge der Tabelle T verhält sich die Außensteuerung genauso, als ob die anhand der Interpretation der Tabelleneinträge realisierte Verbindung über den in FIG 6 gezeigten Eingabedialog eingegeben worden wäre.

Das Konzept der Außensteuerung AS ist also vorteilhaft auch im Falle komplexerer Visualisierungsobjkete VR anwendbar, obwohl hier die Benutzerinteraktion eine andere ist, denn im vorbeschriebenen Fall gibt der Benutzer z.B. den Reglernamen am Visualisierungsobjekt VR ein. Der Grundgedanke der Außensteuerung AS gilt auch für diesen Fall, denn auch bei einer derartigen Konstellation liegen für das Visualisierungsobjekt VR zum Entwurfszeitpunkt keine Kenntnisse über eine eventuelle spätere Kommunikationsbeziehung vor; d.h. das Visualisierungsobjekt VR weist keinen expliziten Aufrufcode auf, der gerade nur bei Kenntnis der zur Laufzeit geplanten Kommunikationsbeziehung schon zum Entwurfszeitpunkt realisierbar wäre. Außerdem geht auch hier die Aktivität ausschließlich von der Außensteurung AS aus.

Entgegen der exemplarischen Darstellung gemäß FIG 7 kann auch der Regler R als außensteuerbare, im wesentlichen Daten liefernde Komponente realisiert sein. Auf die prinzipielle Gleichartigkeit der Außensteuerbarkeit einer im wesentlichen Daten verwertenden Komponente, des Clients CL, bzw. einer im wesentlichen Daten liefernden Komponenten, des Servers SV, weist bereits die Darstellung gemäß FIG 4 hin.

Zur Thematik AcitveX bzw. OCX ist z.B. in der Zeitschrift c't 12/96, Heinz Heise Verlag, Hannover, ein Artikel mit dem Titel Bewegliche Ziele" (S. 258-264) erschienen.

Ein Active-X-Control-Container bietet standardmäßig die Leistung, daß er die in ihm enthaltenen Elemente, also andere Active-X-Komponenten kennt, wobei der Container einen Zugriff auf den Instanzennamen der in ihn enthaltenen Objekte insofern anbietet, als der Container eine Liste von Zeigern, auf die in ihm enthaltenen Objekte verwaltet, und wobei anhand der jeweiligen Zeiger, die auf die jeweils enthaltenen Objekte zeigen, die Klartextbezeichnung der jeweiligen Objekte abgefragt werden kann.

Dabei ist hervorzuheben, daß mittels der OCX-Controls prinzipiell sogar eine Kommunikation oder Interaktion über Applikations-, Hardware- oder Plattform-spezifische Grenzen hinweg möglich ist. Ein OCX-Control einer Applikation A kann mit einem weiteren OCX-Control einer auf der gleichen Hardware bzw. Plattform ablaufenden Applikation B kommunizieren bzw. interagieren. Diese Kommunikation bzw. Interaktion ist auch dann noch möglich, wenn die Applikation B auf einer im Prinzip vergleichbaren, jedoch entfernten, räumlich getrennten Hardware, oder auch auf einer anderen Hardware einer anderen Plattform, mit beispielsweise einem anderen Betriebssystem, abläuft.

In einer vorteilhaften Weiterbildung der Erfindung kommen als Client CL Komponenten gebräuchlicher Software-Pakete, wie z.B. Textverarbeitungen, Tabellenkalkulationen oder Graphikprogramme zur Anwendung. Damit sind im Falle der Verwendung einer Textverarbeitung prinzipiell eine interaktive Wartungsanleitung denkbar, bei die Inhalte von Textobjekten von Zuständen des technischen Prozesses abhängig sind, so daß z.B. je nach Fehlerzustand spezifische Wartungshinweise mit den Textobjekten darstellbar sind. Im Falle einer Tabellenkalkulation ist eine besonders einfache Übernahme von Prozeßdaten zu Protokollierungs- und Auswertungszwecken möglich. Der Anwendungsbereich der Erfindung geht sogar so weit, daß im Falle eines Graphikprogramms in Abhängigkeit von Prozeßzuständen spezifische Graphiken darstellbar sind und damit z.B. auch animierte Prozeßvisualisierungen möglich sind. In allen vorgenannten Fällen gilt es darauf hinzuweisen, daß sich der Datentransfer selbstverständlich nach wie vor auf die jeweiligen Prozeßdaten beschränkt. Im Falle der Textverarbeitung sind die jeweiligen Texte - wie zuvor die graphischen Darstellungen z.B. der Leuchte oder der Reglervisualierung - bereits im Visualisierungsobjekt CL gespeichert und werden in Abhängigkeit von den über die Properties P gelieferten Daten des technischen Prozesses zur Anzeige gebracht.

Abschließend bleibt noch der Hinweis, daß die Flexibilität des erfindungsgemäßen Konzeptes weiter gesteigert wird, wenn das Daten- bzw. Informationsübertragungssystem derart fortgebildet wird, daß auch die Außensteuerung als Softwarekomponente mit mindestens einer Property ausgebildet ist, wobei der Daten- oder Informationsaustausch von oder zu der Außensteuerung ausschließlich mittels des Properties erfolgt und wobei der Daten- oder Informationsaustausch die Ausführung eines der Property zugeordneten Codes bewirkt.

Zusammenfassend läßt sich die Erfindung wie folgt kurz beschreiben:

Die Erfindung bezieht sich auf den Aspekt, einen im Stand der Technik erforderlichen jeweils anwendungsspezifischen Aufruf-Code als eine in einer separaten Komponente realisierte Außensteuerung auszuführen, wobei die Außensteuerung in beliebigen Containern verwendbar ist, ohne dabei die Container selbst zu verändern, noch diese zum Entwurfszeitpunkt der Außensteuerung überhaupt zu kennen.

## Patentansprüche

1. Daten- bzw. Informationsübertragungssystem insbesondere zur Visualisierung von Daten, z.B. Prozeßdaten, oder Ereignissen, mit einer Verarbeitungs- und Speichereinrichtung (VS), insbesondere einem Mikroprozessor (UP) mit einem zugeordneten Speicher (MM), mit einer von dieser ansteuerbaren Visualisierungseinrichtung (VE), insbesondere einem Bildschirm (VE), und mit Mitteln zum Anschluß externer Sensoren (ES) oder Aktoren (EA) eines gesteuerten und/oder überwachten technischen Prozesses (TP),
- wobei zumindest eine im wesentlichen Daten liefernde Komponente (SV), im folgenden Server (SV), zumindest eine im wesentlichen Daten verwertende Komponente (CL), im folgenden Client (CL), und zumindest eine Kontroll-, Leit- oder Verteilkomponente (AS), im folgenden Außensteuerung (AS), vorgesehen sind,
- wobei zwischen Client (CL) und Server (SV) keine direkte Daten- oder Informationsaustauschmöglichket besteht, so daß der Daten- oder Informationsaustausch mittels der Außensteuerung (AS) bewirkt wird, indem der Daten- oder Informationsaustausch ausschließlich zwischen Server (SV) und Außensteuerung (AS) einerseits und Außensteuerung (AS) und Client (CL) andererseits stattfindet,
- wobei mittels des Servers (SV) Daten oder Informationen aus dem Prozeß (TP) aufnehmbar sind und wobei mittels des Clients (CL) die Daten oder Informationen visualisierbar sind,
- wobei zumindest der Client (CL) als Softwarekomponente mit mindestens einer Außenschnittstelle (P), im folgenden Property (P), ausgebildet ist,
- wobei der Daten- oder Informationsaustausch von oder zu dem Client (CL) ausschließlich mittels des Properties (P) erfolgt und wobei der Daten- oder Informationsaustausch die Ausführung eines der Property (P) zugeordneten Codes bewirkt.

2. Daten- bzw. Informationsübertragungssystem nach Anspruch 1, **dadurch gekennzeichnet,** daß die Außensteuerung (AS) Mittel zur Identifikation der erreichbaren Clients (CL) aufweist, daß für die Außensteuerung eine Referenz auf die erreichbaren Clients (CL) abspeicherbar ist, wobei die Referenzen benutzerselektierbar sind und wobei anhand einer benutzerselektierbaren Referenz die Properties (P) des erreichbaren Clients (CL) zugänglich sind, so daß die Kommunikationsbeziehung zwischen Außensteuerung (AS) und Client festlegbar ist, indem für die Außensteuerung (AS) für jede für einen erreichbaren Client (CL) zugängliche Property (P) zumindest ein übermittelbares Datum abspeicherbar ist.
